# EUROPÄISCHE PATENTANMELDUNG

(11) **EP 1 491 442 A1**
(43) Veröffentlichungstag der Anmeldung: **29.12.2004**
(21) Anmeldenummer: 04014915.5
(22) Anmeldetag: 25.06.2004
(51) Int. Cl.: B64C 9/04

(54) **Bestätigungseinrichtung für eine an der Hinterkante des Tragflügels eines Flugzeugs angeordnete Ruderklappe**

(30) Priorität: 25.06.2003 DE 10328717
(71) Anmelder: EADS Deutschland GmbH, 85521 Ottobrunn (DE)
(72) Erfinder: Perez-Sanchez, Juan, 83620 Feldkirchen-Westerham (DE)

(57) **Zusammenfassung**

Es wird eine Betätigungseinrichtung für eine an der Hinterkante des Tragflügels (1) eines Flugzeugs angeordnete Ruderklappe (2), die zwischen einer eingefahrenen Stellung, in welcher sie nahe der Hinterkante des Tragflügels (1) befindlich und im wesentlichen in der Flügelebene eingestellt ist, und einer ausgefahrenen Stellung, in welcher sie gegen die Hinterkante des Tragflügels (1) nach rückwärts verschoben und gegen die Flügelebene abgewinkelt ist, und jeweiligen Zwischenstellungen verfahrbar ist, beschrieben. Erfindungsgemäß ist es vorgesehen, dass die Betätigungseinrichtung eine einerseits mit der tragenden Struktur des Flügels (1) und andererseits mit der Ruderklappe (2) verbundene Pyramidengetriebeanordnung (10, 20; 30, 40) mit mindestens einer, insbesondere in einem endlichen Abstand von der Ebene des Flügelprofils liegenden, virtuellen Drehachse (A1, A2; A3, A4) umfasst, bezüglich der die Ruderklappe (1) verfahrbar ist, sowie eine Antriebseinrichtung (18, 19; 38, 39) zum Einfahren und Ausfahren der Ruderklappe (2).

## Beschreibung

Die Erfindung betrifft eine Betätigungseinrichtung für eine an der Hinterkante des Tragflügels eines Flugzeugs angeordnete Ruderklappe gemäß dem Oberbegriff des Anspruchs 1.

Zur Auftriebserhöhung für Start und Landung und für bestimmte andere Flugmanöver werden neben anderen Mitteln Ruderklappen verwendet, die an der Hinterkante des Flugzeugtragflügels angeordnet und nach Art einer sogenannten Fowler-Klappe in einer kombinierten Translations- und Rotationsbewegung zwischen einer eingefahrenen Stellung, in welcher diese nahe der Hinterkante des Tragflügels und im wesentlichen in der Flügelebene befindlich sind, und einer ausgefahrenen Stellung, in welcher sie gegen die Hinterkante des Tragflügels nach rückwärts verschoben und gegen die Flügelebene nach unten abgewinkelt sind, und in jeweiligen Zwischenstellungen verfahrbar ist.

Zur Betätigung solcher Ruderklappen sind Mechanismen nötig, die einerseits in der Lage sein müssen, die an den Klappen auftretenden sehr hohen Lasten aufzunehmen und andererseits sehr präzise Bewegungen ausführen können.

Es sind eine Anzahl von verschiedenen Arten solcher Betätigungseinrichtungen bekannt.

In der DE 26 11 918 A1, der US 4 702 442 und der US 4 434 959 werden jeweils Betätigungseinrichtungen für an der Hinterkante des Tragflügels eines Flugzeugs angeordnete Ruderklappen, die der Auftriebserhöhung dienen, beschrieben, bei denen zwei Ruderklappen, hier in Form von sogenannten Doppelspalt- Fowler-Klappen, die in Richtung der Profiltiefe des Tragflügels hintereinander angeordnet sind. IN der ausgefahrenen Position sind diese vonei nander bzw. von der Hinterkante des Tragflügels beabstandet, um einen Spalt zu bilden, um einen Durchlaß für eine von der Unterseite des Tragflügels kommende Luftströmung zu gewähren. Die Klappen sind über einen mehrere Gelenke und miteinander gekoppelte Scheren aufweisenden und durch einen Kurbeltrieb antreibbaren Mechanismus an der tragenden Struktur des Flügels gehalten und betätigbar.

In der DE 196 47 077 A1 ist eine Betätigungseinrichtung für eine auftriebserhöhende Ruderklappe beschrieben, bei der die Klappe im Bereich ihres vorderen Endes gelenkig mit einem Trägerwagen verbunden ist, der über Führungselemente in einer nahe der Hinterkante des Tragflügels vorgesehenen, in Richtung der Profiltiefe des Tragflügels verlaufenden Führungsbahn geführt und entlang dieser verfahrbar ist, und die an einem in Richtung der Profiltiefe weiter hinten liegenden Kraftangriffspunkt über eine Schwinge schwenkbar mit dem hinteren Ende eines in Richtung der Profiltiefe verlaufenden Trägers gekoppelt ist, welcher auch die Führungsbahn für den Trägerwagen trägt. Bei der Betätigung mittels eines Kurbeltriebes wird die Ruderklappe einerseits auf dem Trägerwagen nach hinten verschoben und andererseits über die Schwinge nach unten abgewinkelt.

Den bekannten Betätigungseinrichtungen gemeinsam ist, dass deren Mechanismen in gondelähnlichen Gehäusen, sogenannten Fairings, die beim Ausfahren der Klappen teilweise der kombinierten Translations- und Rotationsbewegung derselben folgend nach unten angestellt werden, unterhalb des Tragflügels untergebracht sind. Diese Gondeln benötigen ein großes Volumen und erhöhen den aerodynamischen Querschnitt und somit Widerstand und Verbrauch des Flugzeugs im Reiseflug und sie vermindern die aerodynamische Wirksamkeit der Ruderklappe durch eine Blockage der Strömung zwischen Flügelhinterkante und ausgefahrener Klappe und sind eine störende Geräuschquelle.
Die Aufgabe der Erfindung ist es, eine verbesserte Betätigungseinrichtung der eingangs genannten Art zu schaffen.

Diese Aufgabe wird erfindungsgemäß durch eine Betätigungseinrichtung für eine an der Hinterkante des Tragflügels eines Flugzeugs angeordnete Ruderklappe mit den Merkmalen des Anspruchs 1 gelöst.

Vorteilhafte Weiterbildungen der erfindungsgemäßen Betätigungseinrichtung sind in den Unteransprüchen angegeben.

Erfindungsgemäß ist eine Betätigungs-Einrichtung zur Bewegung zweier Strukturteile relativ zueinander zwischen einer eingefahrenen Stellung und einer ausgefahrenen Stellung mit einem Rotations- und einem Translations-Anteil vorgesehen, bei der die Betätigungs-Einrichtung zumindest eine einerseits mit der tragenden Struktur des Flügels und andererseits mit der Ruderklappe verbundene Verstell-Einheit mit mindestens einer, insbesondere in einem endlichen Abstand von der Ebene des Flügelprofils liegenden, virtuellen Drehachse sowie eine Antriebseinrichtung umfasst, bezüglich der die Strukturteile zueinander verfahrbar sind.

Durch die Erfindung wird eine Betätigungseinrichtung für eine an der Hinterkante des Tragflügels eines Flugzeugs angeordnete Ruderklappe, die zwischen einer eingefahrenen Stellung, in welcher sie nahe der Hinterkante des Tragflügels befindlich und im wesentlichen in der Flügelebene eingestellt ist, und einer ausgefahrenen Stellung, in welcher sie gegen die Hinterkante des Tragflügels nach rückwärts verschoben und gegen die Flügelebene nach unten abgewinkelt ist, und in jeweiligen Zwischenstellungen verfahrbar ist, geschaffen. Erfindungsgemäß ist es vorgesehen, dass die Betätigungseinrichtung eine einerseits mit der tragenden Struktur des Flügels und andererseits mit der Ruderklappe verbundene Pyramidengetriebeanordnung mit mindestens einer, insbesondere in einem endlichen Abstand von der Ebene des Flugsprofils liegenden, virtuellen Drehachse, bezüglich der die Ruderklappe verfahrbar ist, sowie eine Antriebseinrichtung zum Einfahren und Ausfahren der Ruderklappe umfasst.

Ein Vorteil der erfindungsgemäßen Betätigungseinrichtung ist es, dass sie ohne an der Unterseite des Tragflügels vorzusehende Gondeln (Fairings) auskommt, wodurch aerodynamischer Widerstand, Kraftstoffverbrauch und Geräuschentwicklung vermindert werden. Ein weiterer Vorteil ist es, dass sie mit einer geringeren Anzahl von beweglichen Teilen auskommt, verbunden mit einem geringerem Herstellungsaufwand, größerer Zuverlässigkeit und Wartungsfreundlichkeit.

Gemäß einer Ausführungsform der erfindungsgemäßen Betätigungseinrichtung ist es vorgesehen, dass die Betätigungseinrichtung eine Pyramidengetriebeanordnung, welche im wesentlichen zur Veränderung des Abstandes der Ruderklappe von der Hinterkante des Tragflügels dient und eine mechanisch mit der Pyramidengetriebeanordnung gekoppelte Verstelleinrichtung, welche im wesentlichen zur Verstellung der Abwinkelung der Ruderklappe dient, umfasst.

Gemäß einer bevorzugten Ausführungsform hiervon ist die Verstelleinrichtung durch ein zweites Pyramidengetriebe gebildet ist, welches mit einem ersten Pyramidengetriebe der Pyramidengetriebeanordnung zwischen der tragenden Struktur des Flügels und der Ruderklappe mechanisch hintereinandergeschaltet ist.

Bei einer bevorzugten Ausführungsform der erfindungsgemäßen Betätigungseinrichtung umfasst die Pyramidengetriebeanordnung erste und zweite Pyramidengetriebe, die zwischen der tragenden Struktur des Flügels und der Ruderklappe mechanisch hintereinandergeschaltet sind.

Vorzugsweise haben die ersten und zweiten Pyramidengetriebe unterschiedlich weit entfernt liegende virtuelle Drehachsen.

Gemäß einer bevorzugten Ausführungsform ist es vorgesehen, dass das erste, näher zum Tragflügel hin angeordnete Pyramidengetriebe eine weiter entfernte virtuelle Drehachse aufweist als die virtuelle Drehachse des zweiten, näher zur Ruderklappe hin angeordnetem Pyramidengetriebes.

Die weiter entfernte virtuelle Drehachse kann im Unendlichen liegen.

Vorzugsweise ist es bei der erfindungsgemäßen Betätigungseinrichtung vorgesehen, dass die ersten und/oder zweiten Pyramidengetriebe jeweils einen ersten Schenkel und einen zweiten Schenkel enthalten, die an ihrem einen Ende durch eine gemeinsame Schwenkachse miteinander gelenkig verbunden sind, und die an ihren anderen Enden über erste Endachsen direkt oder indirekt mit dem Tragflügel und über eine zweite Endachse direkt oder indirekt mit der Ruderklappe verbunden sind.

Hierbei ist insbesondere vorgesehen, dass die erste und zweite Endachse und die Schwenkachse sich in einem gemeinsamen Scheitelpunkt (Vertex) schneiden, der auf der virtuellen Drehachse liegt.

Gemäß einer Ausführungsform der erfindungsgemäßen Betätigungseinrichtung ist es vorgesehen, dass der erste Schenkel der ersten Pyramidengetriebe mit seiner ersten Endachse an einem Punkt mit der tragenden Struktur des Flügels verbunden ist, der in Richtung parallel zu der virtuellen Drehachs e seitlich um einen Abstand gegen den Punkt versetzt ist, an welchem der zweite Schenkel mit seiner zweiten Endachse direkt oder indirekt mit der Ruderklappe verbunden ist, welcher im wesentlichen der Länge des ersten Schenkels entspricht.

Gemäß einer anderen bevorzugten Ausführungsform der erfindungsgemäßen Betätigungseinrichtung ist es vorgesehen, dass der erste Schenkel der ersten Pyramidengetriebe mit seiner ersten Endachse an einem Punkt mit der tragenden Struktur des Flügels verbunden ist, der in Richtung der Profiltiefe gesehen im wesentlichen fluchtend vor dem Punkt liegt, an welchem der zweite Schenkel mit seiner zweiten Endachse direkt oder indirekt mit der Ruderklappe verbunden ist.

Gemäß bevorzugten Ausführungsformen der erfindungsgemäßen Betätigungseinrichtung kann es vorgesehen sein, dass das zweite Pyramidengetriebe mechanisch hinter das erste Pyramidengetriebe geschaltet ist, wobei der erste Schenkel des zweiten Pyramidengetriebes mit seiner ersten Endachse mit der zweiten Endachse des ersten Pyramidengetriebes verbunden oder mit dieser gemeinsam ist, und wobei der zweite Schenkel des zweiten Pyramidengetriebes mit seiner zweiten Endachse an einem Punkt mit der Ruderklappe verbunden ist, der in Richtung der Profiltiefe gesehen im wesentlichen fluchtend hinter dem Punkt liegt, an welchem der erste Schenkel mit seiner ersten Endachse mit dem ersten Pyramidengetriebe verbunden ist.

Gemäß einer anderen Ausführungsform der erfindungsgemäßen Betätigungseinrichtung ist es vorgesehen, dass die Betätigungseinrichtung eine einzige Pyramidengetriebeanordnung, umfasst welche sowohl zur Veränderung des Abstandes der Ruderklappe von der Hinterkante des Tragflügels als auch zur Verstellung der Abwinkelung der Ruderklappe dient.

Vorteilhafterweise ist die Antriebseinrichtung zum Einfahren und Ausfahren der Ruderklappe eine mit dem ersten Pyramidengetriebe gekoppelte Drehaktuatoreinrichtung.

Gemäß einer bevorzugten Ausführungsform ist die Drehaktuatoreinrichtung für ihren Antrieb mit einer im wesentlichen in Richtung der Flügelausdehnung verlaufenden Antriebswelle gekoppelt.

Bei bevorzugten Ausführungsformen ist es vorgesehen, dass das zweite Pyramidengetriebe für seinen Antrieb mit dem ersten Pyramidengetriebe gekoppelt ist.

Hierbei kann es insbesondere vorgesehen sein, dass der erste Schenkel des zweiten Pyramidengetriebes für den Antrieb mit dem zweiten Schenkel des ersten Pyramidengetriebes gekoppelt ist oder mit diesem einstückig ausgebildet ist.

Im folgenden werden Ausführungsbeispiele der Erfindung anhand der Zeichnung erläutert.

Es zeigt:
- Figur 1 eine schematische perspektivische Darstellung einer Ausführungsform von zwei parallel wirkenden erfindungsgemäßen Betätigungs-Einrichtungen in einer eingefahrenen Stellung, die zum Verstellen einer Ruderklappe an einem Tragflügel angeordnet ist und eine erste und eine zweite Verstell-Einheit jeweils mit drei Drehachsen und jeweils in der Ausführungsform mit zwei parallel verlaufenden Paaren von Hebeln aufweist, die die Kanten einer dreiseitigen Pyramide bilden, wobei die Drehachsen-Pyram ide der Verstell-Einheiten in dergleichen Orientierung verlaufen,
- Figur 2 die Betätigungs-Einrichtung nach der Figur 1 in einer ausgefahrenen Stellung,
- Figur 3 eine schematische Darstellung einer weiteren Ausführungsform der Anordnung von zwei Betätigungs-Einrichtungen zum Verstellen einer Ruderklappe an einem Tragflügel in einer eingefahrenen Stellung, wobei die erste Verstell-Einrichtung aus zwei parallel wirksamen Paaren von Hebeln und die zweite Verstell-Einrichtung aus zwei parallel wirksamen Hebeln und einem Drehgelenk in der Drehachse der entsprechenden Endachse der ersten Verstell-Einrichtung gebildet ist, und wobei die Betätigungs-Einrichtung in der ausgefahrenen Stellung gezeigt ist;
- Figur 4 die Betätigungs-Einrichtung nach der Figur 3 in der ausgefahrenen Stellung,
- Figur 5 eine detaillierte perspektivische Darstellung einer weiteren Ausführungsform der Betätigungs-Einrichtung in der Anordnung an der Ruderklappe nach der Figur 3 mit jeweils zwei parallel wirkenden VerstellEinrichtungen,
- Figur 6 eine weitere perspektivische Darstellung der Ausführungsform der Betätigungs-Einrichtung nach der Figur 5;
- Figur 7 eine weitere perspektivische Darstellung der Ausführungsform der Betätigungs-Einrichtung nach der Figur 5 in einer Stellung, in der die Ruderklappe ausgefahren ist;
- Figur 8 eine weitere perspektivische, sich aus einer Sicht von schräg oberhalb der Ruderklappe ergebende Darstellung der Ausführungsform der Betätigungs-Einrichtung nach der Figur 5 in einer Stellung, in der die Ruderklappe eingefahren ist;
- Figur 9 eine weitere perspektivische, sich aus einer Draufsicht ergebende Darstellung der Ausführungsform der Betätigungs-Einrichtung nach der Figur 5 in einer Stellung, in der die Ruderklappe ausgefahren ist;
- Figur 10 eine Seitenansicht der Ausführungsform der Betätigungs-Einrichtung nach der Figur 5 in einer Stellung, in der die Ruderklappe eingefahren ist;
- Figur 11 eine Seitenansicht der Ausführungsform der Betätigungs-Einrichtung nach der Figur 5 in einer Stellung, in der die Ruderklappe ausgefahren ist, wobei Zwischenstellungen der Ruderklappe andeutungsweise dargestellt sind;
- Figur 12 eine schematische Darstellung einer weiteren Ausführungsform der Erfindung, die eine Alternative zu der in den Figuren 3 und 4 dargestellten Ausführungsform ist, wobei die Drehachsen-Pyramide der Verstell-Einheiten in dergleichen Orientierung verlaufen und wobei die Stellung gezeigt ist, in der die Ruderklappe eingefahren ist;
- Figur 13 die Ausführungsform nach der Figur 12 in der Darstellungsweise der Figur 12, wobei die Stellung gezeigt ist, in der die Ruderklappe ausgefahren ist;
- Figur 14 eine schematische perspektivische Darstellung einer im Vergleich zur Ausführungsform nach der Figur 1 alternativen Ausführungsform von zwei parallel wirkenden erfindungsgemäßen Betätigungs-Einrichtungen in einer eingefahrenen Stellung, wobei die Drehachsen-Pyramide der Verstell-Einheiten in der gleichen Orientierung verlaufen,
- Figur 15 die Betätigungs-Einrichtung nach der Figur 14 in einer ausgefahrenen Stellung,
- Figur 16 eine schematische Darstellung einer auf der Ausführungsform nach der Figur 14 basierenden weiteren Ausführungsform der Anordnung von zwei Betätigungs-Einrichtungen, wobei die erste Verstell-Einrichtung aus zwei parallel wirksamen Paaren von Hebeln und die zweite Verstell-Einrichtung aus zwei parallel wirksamen Hebeln und einem Drehgelenk in der Drehachse der entsprechenden Endachse der ersten Verstell-Einrichtung gebildet ist, und wobei die Betätigungs-Einrichtung in der eingefahrenen Stellung gezeigt ist, wobei die ggg;
- Figur 17 eine schematische Darstellung der Ausführungsform nach der Figur 16 in der ausgefahrenen Stellung, wobei die Drehachsen-Pyramide der Verstell-Einheiten in unterschiedlicher Orientierung verlaufen;
- Figur 18 eine detaillierte perspektivische Darstellung einer weiteren Ausführungsform der Betätigungs-Einrichtung in der Anordnung an der Ruderklappe nach der Figur 16 mit jeweils zwei parallel wirkenden VerstellEinrichtungen,
- Figur 19 eine weitere perspektivische Darstellung der Ausführungsform der Betätigungs-Einrichtung nach der Figur 18;
- Figur 20 eine weitere perspektivische Darstellung der Ausführungsform der Betätigungs-Einrichtung nach der Figur 18 in der ausgefahrenen Stellung;
- Figur 21 eine weitere perspektivische Darstellung eines Teils der Ausführungsform der Betätigungs-Einrichtung nach der Figur 18 ind er eingefahrenen Stellung;
- Figur 22 eine weitere perspektivische Darstellung eines Teils der Ausführungsform der Betätigungs-Einrichtung nach der Figur 18 in der ausgefahrenen Stellung;
- Figur 23 eine schematische Darstellung einer weiteren Ausführungsform der Erfindung, die eine Alternative zu der in den Figuren 16 und 17 dargestellten Ausführungsform ist, wobei die Drehachsen-Pyramide der Verstell-Einheiten in dergleichen Orientierung verlaufen und wobei die Stellung gezeigt ist, in der die Ruderklappe eingefahren ist;
- Figur 24 die Ausführungsform nach der Figur 23 in der Darstellungsweise der Figur 23, wobei die Stellung gezeigt ist, in der die Ruderklappe ausgefahren ist,

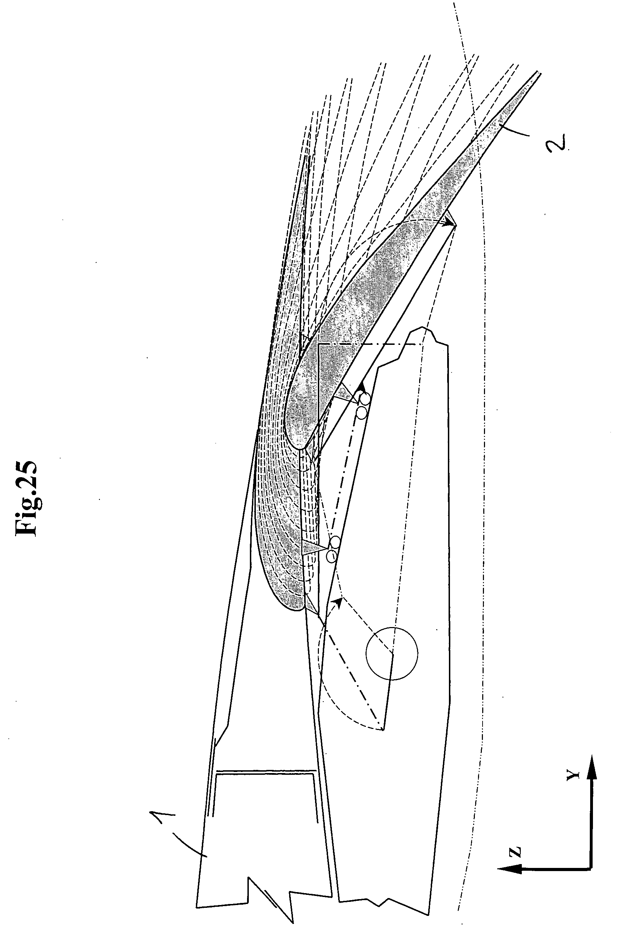

- Figur 25 die Ausführungsform nach der Figur 23 in verschiednen Verstell-Positionen.

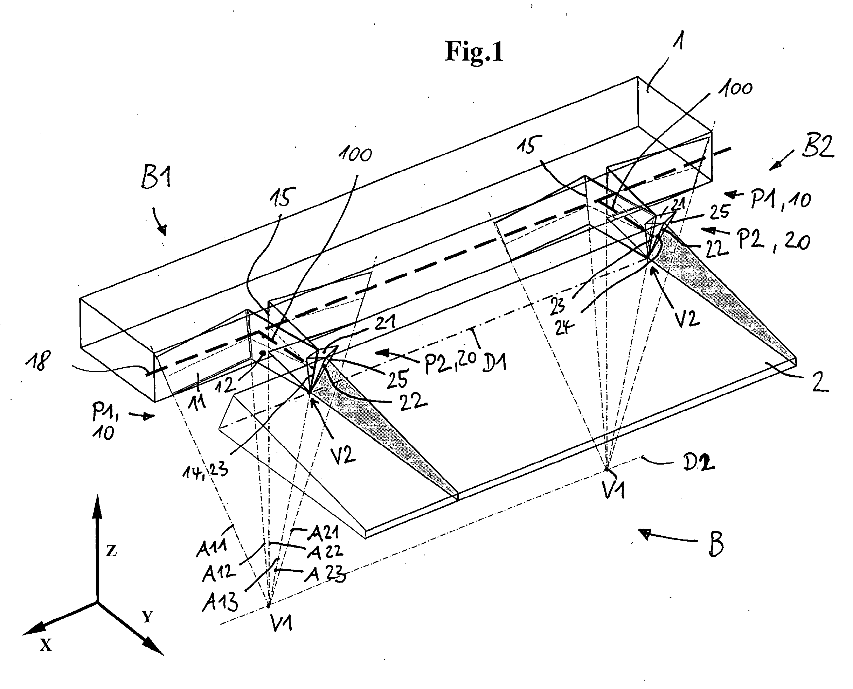

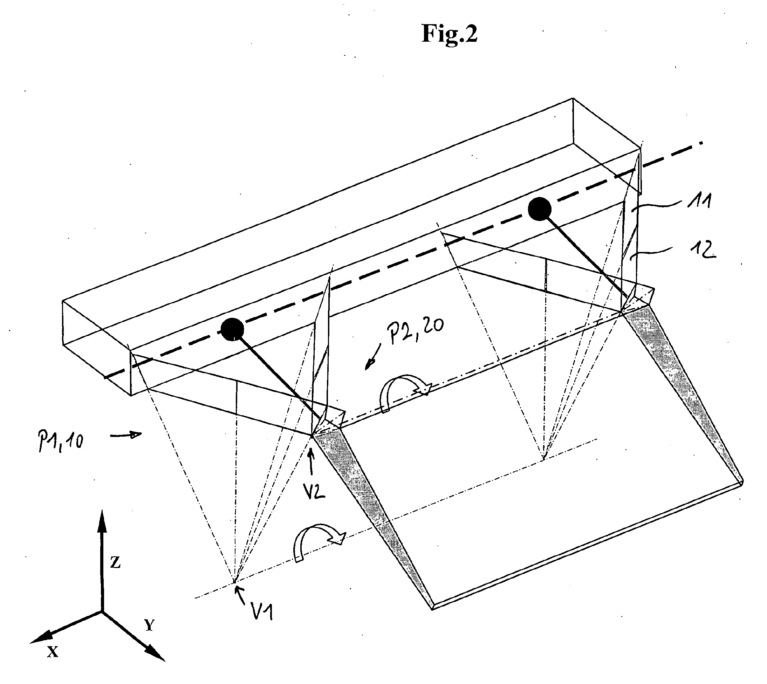

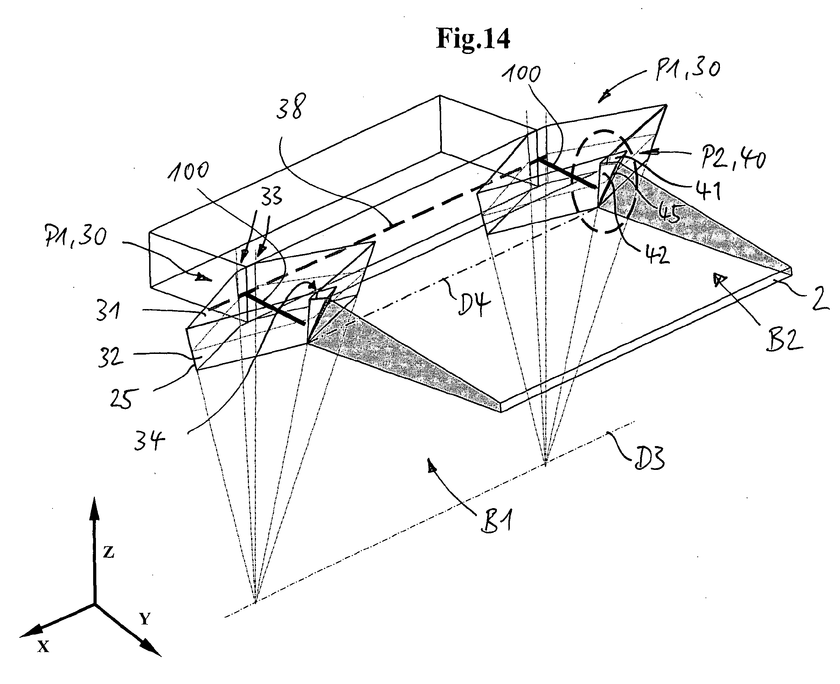

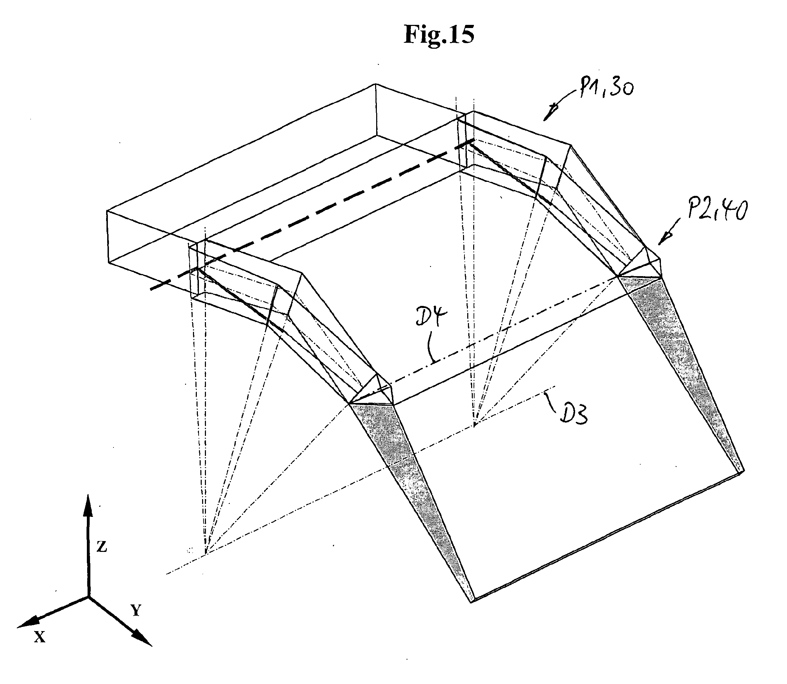

In den Figuren ist schematisiert ein Flügelkasten eines Tragflügels 1 eines Flugzeugs gezeigt, an dessen Hinterkante eine Ruderklappe 2 angeordnet ist, die in bekannter Weise der Auftriebserhöhung dient und mittels der erfindungsgemäßen Betätigungs-Einrichtung B nach Art einer Fowler-Klappe einer kombinierten Translations- und Rotationsbewegung zwischen einer eingefahrenen Stellung und einer ausgefahrenen Stellung, sowie in Zwischenstellungen verfahrbar ist. In der eingefahrenen Stellung ist die Ruderklappe 2 üblicherweise nahe des Tragflügels 1 oder an diesem befindlich (z.B. Figuren 1 und 14) und in der ausgefahrenen Stellung ist diese in bezug auf die Hinterkante des Tragflügels 1 nach rückwärts oder in Strömungsrichtung oder im wesentlichen in Flügeltiefenrichtung X verschoben und um eine Achse in etwa in Spannweitenrichtung nach unten, also entgegen der Richtung der Auftriebskraft, abgewinkelt (z.B. Figuren 2 und 15). Die Erfindung kann jedoch auch generell zu Betätigung von Flügeln oder Struktur- oder Flügelteilen an dem zu verstellenden Flügel oder Strukturteil angeordnet sein. Im folgenden wird die Erfindung in ihrer vorzugsweisen Anwendung an einer Ruderklappe, die auch eine Auftriebs-Klappe sein kann, beschrieben. Ebenso könnte sich die Erfindung auf die Betätigung eines Vorflügels oder eines Canard gerichtet sein.

Die Betätigungs-Einrichtung B verbindet den Flügel 1 und die Ruderklappe 2 und dient zum Ausfahren und Einfahren der Ruderklappe 2 mittels einer Steuer-Einrichtung und einer mit dieser angesteuerten Stellantriebs-Einrichtung (nicht dargestellt). Dabei können auch zwei oder mehr als zwei Betätigungseinrichtung zum Verstellen einer Ruderklappe zwischen einer Trägerelement, also z.B. einem Tragflügel, und der Ruderklappe 2 oder dem Strukturteil angeordnet sein, so dass zwei oder mehr Betätigungs-Einrichtungen parallel wirksam sind. Es können weiterhin auch zwei oder mehr als zwei Betätigungseinrichtungen in bezug auf ihre Wirkungslinie hintereinander geschaltet, d.h. miteinander gekoppelt werden.

Die Betätigungseinrichtung B umfasst erfindungsgemäß eine erste und eine zweite Verstell-Einheit P1 bzw. P2 auf, die in ihrer Wirkungslinie oder Wirkungskette oder in der Verstell-Richtung hintereinander gekoppelt sind. Jede Verstell-Einheit P 1 bzw. P2 weist insgesamt zumindest drei Verstell-Achsen A11, A12, A13 bzw. A21, A22, A23 auf, von denen zwei Verstell-Achsen A11, A13 bzw. A21, A23 in bezug auf die VerstellBewegung Endachsen sind. Die Verstell-Achsen sind Drehachsen oder SchwenkAchsen von Verstell-Hebeln der Verstell-Einheit. Jede Verstell-Einheit P1 bzw. P2 ist derart gestaltet, dass bei einer Betätigung derselben die Endachsen relativ zueinander eine Translations- und eine Rotations-Bewegung ausführen. Dazu ist jede Verstell-Einheit P1 bzw. P2 so gebildet, dass die drei Verstell-Achsen A11, A12, A13 bzw. A21, A22, A23 zumindest in einer Zwischenstellung der Betätigungs-Einrichtung B, B1, B2 die Kanten einer dreiseitigen Pyramide mit einem Scheitelpunkt oder einem Vertex V bilden. Die Verstell-Einrichtung könnte daher auch Pyramidenantrieb bezeichnet werden, da es sich bei dieser um ein Gelenk mit einer Gelenkachsen-Anordnung in Pyramidenform oder um eine Gelenkachsen-Anordnung, die die Kanten einer dreiseitigen Pyramide bildet.

Der Scheitelpunkt V ist vorzugsweise beabstandet von einer mittleren Wirkungslinie, kurz Wirkungslinie für die Translations-Bewegung des Pyramidengetriebes gelegen, so dass bei der Verstellung der Verstell-Einrichtung ein Translationsanteil bei der Verstellung der Ruderklappe 2 oder des Strukturteils entsteht. Mit Zunahme der Entfernung des Vertex V von der Wirkungslinie für die Translations-Bewegung sinkt der Anteil der Rotations-Bewegung und steigt der Anteil der Translations-Bewegung, die mit dem jeweiligen Pyramidengetriebe ausführbar sind.

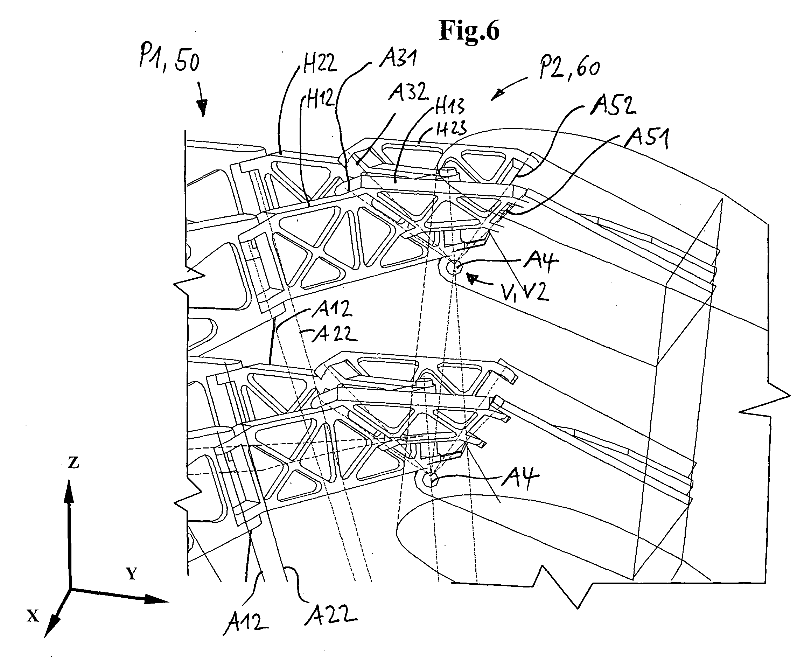

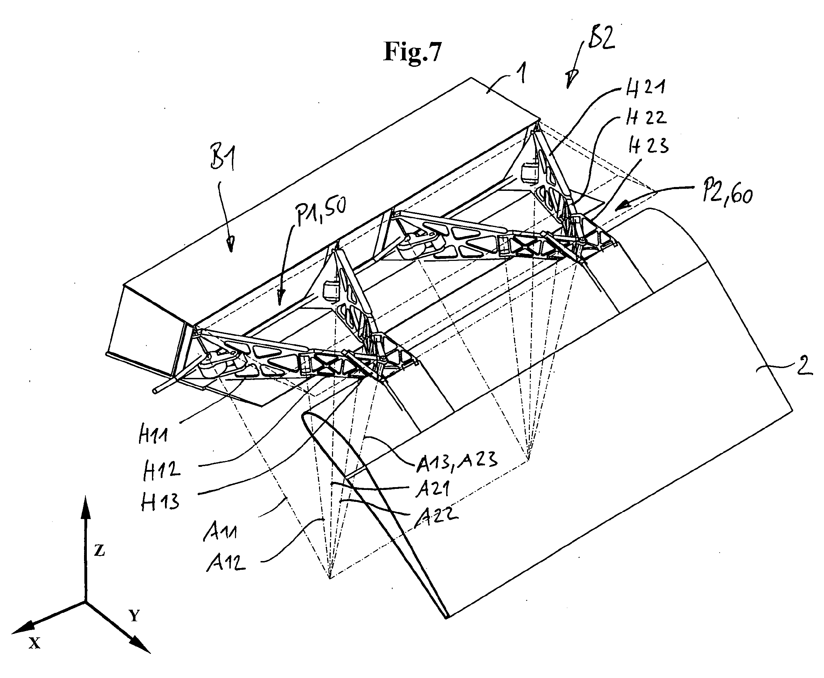

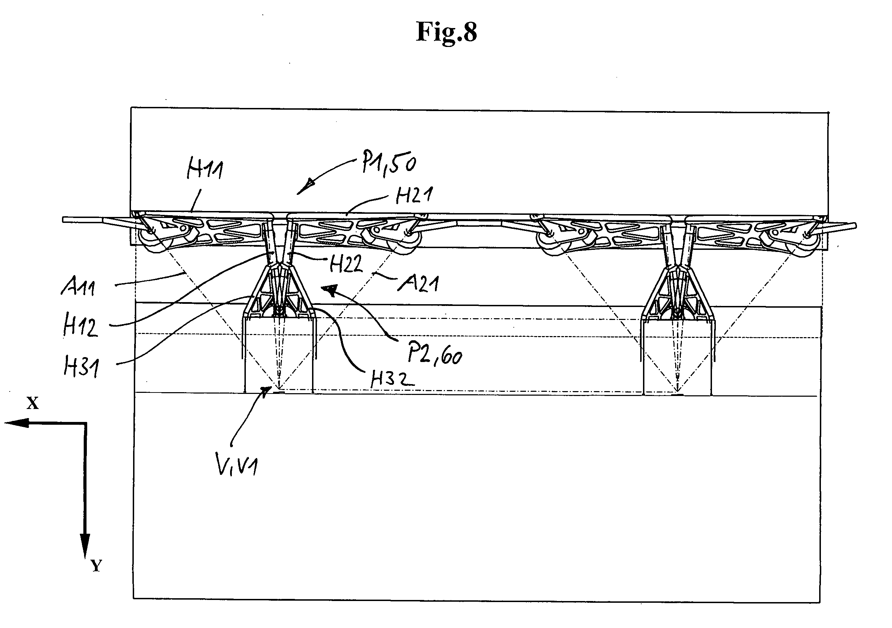

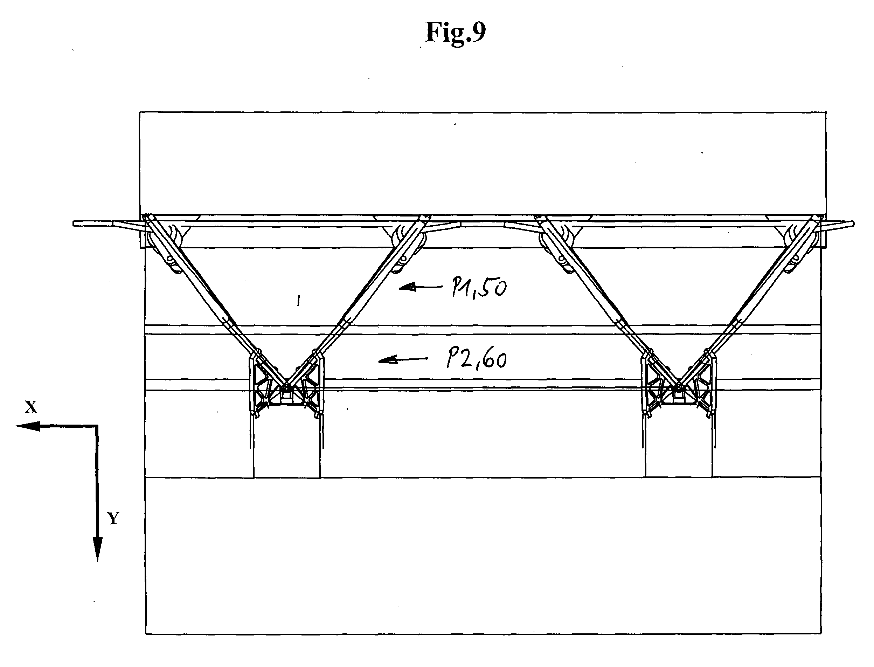

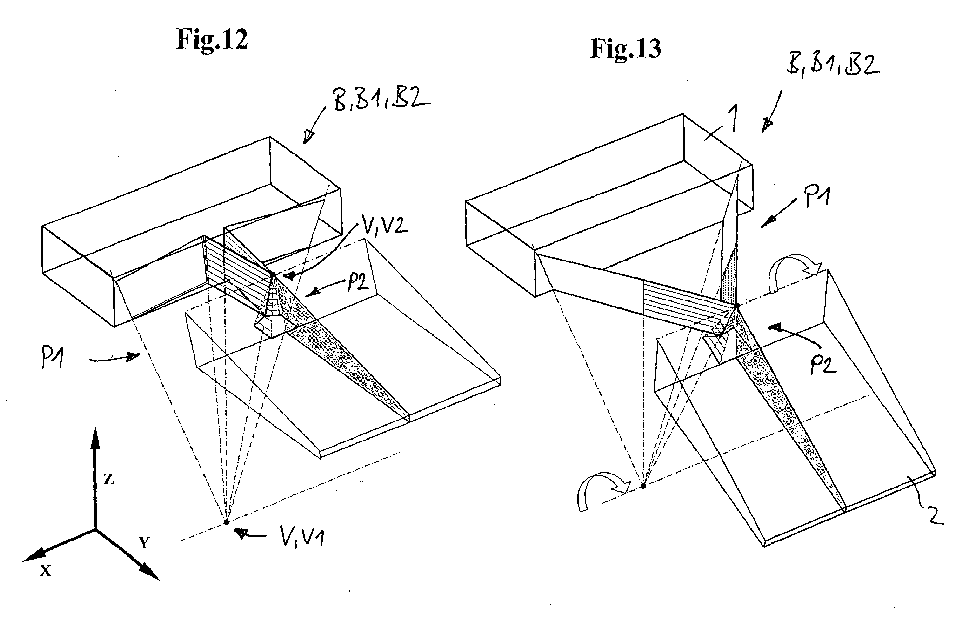

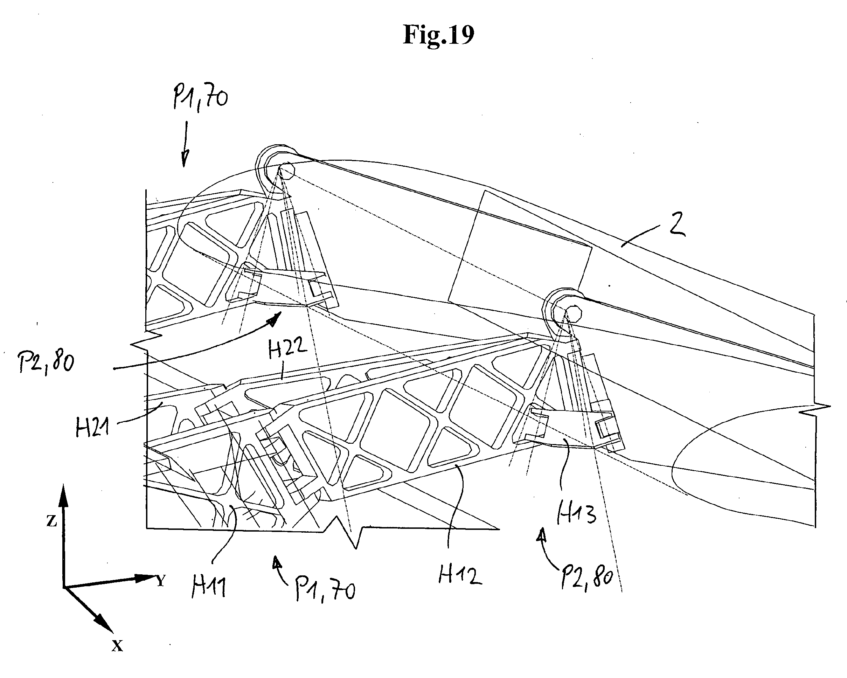

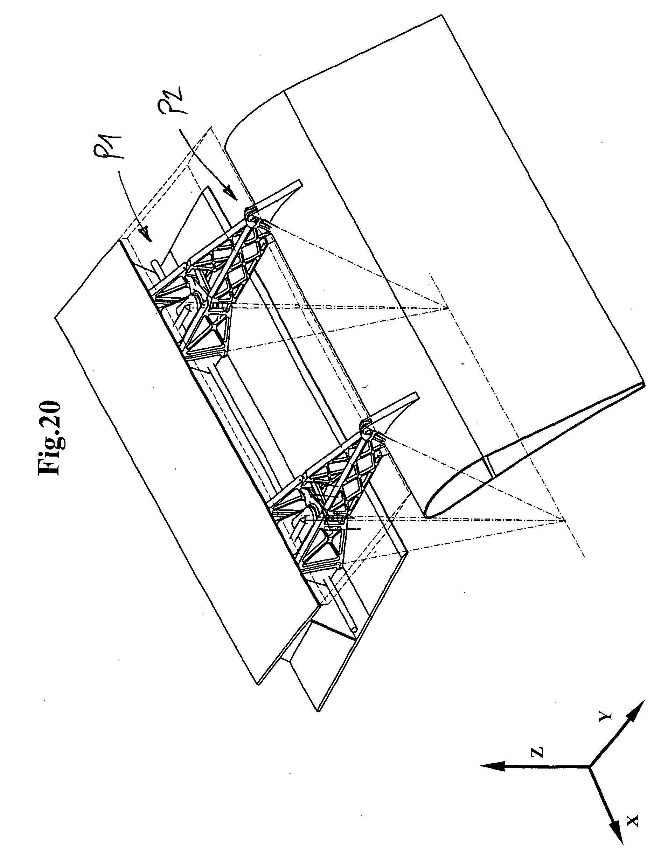

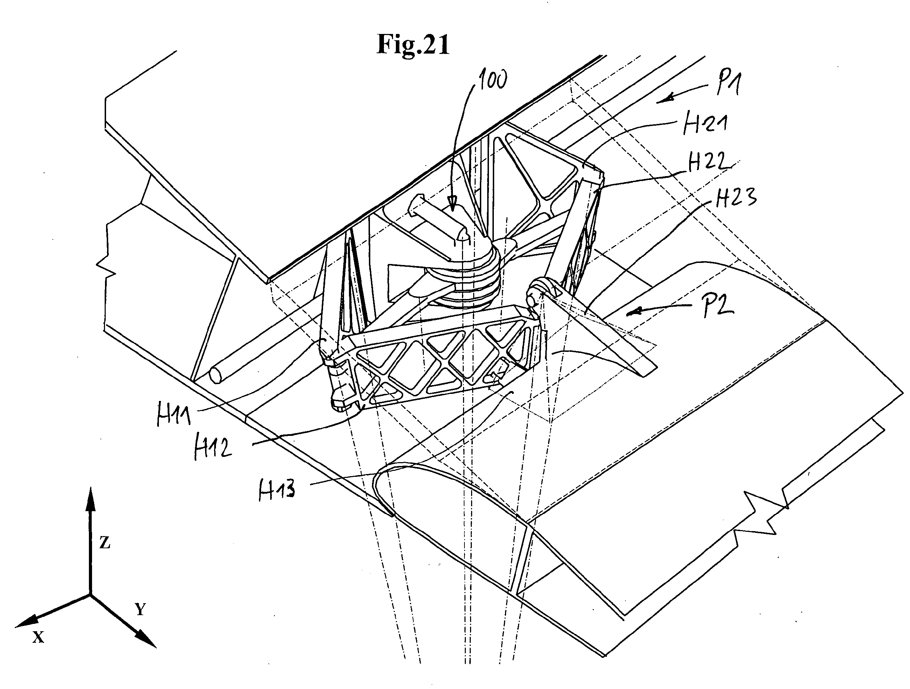

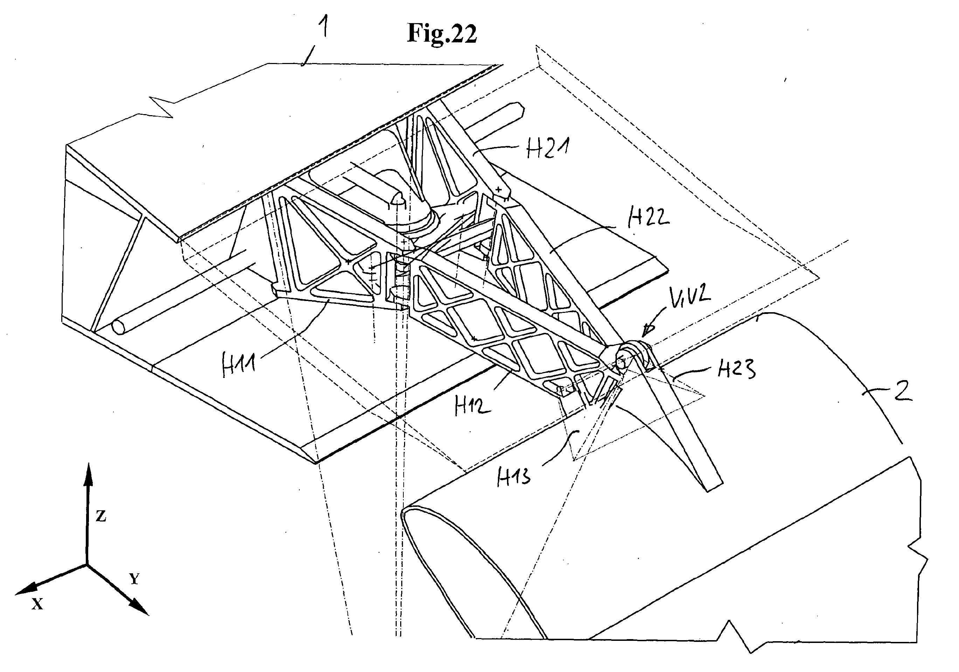

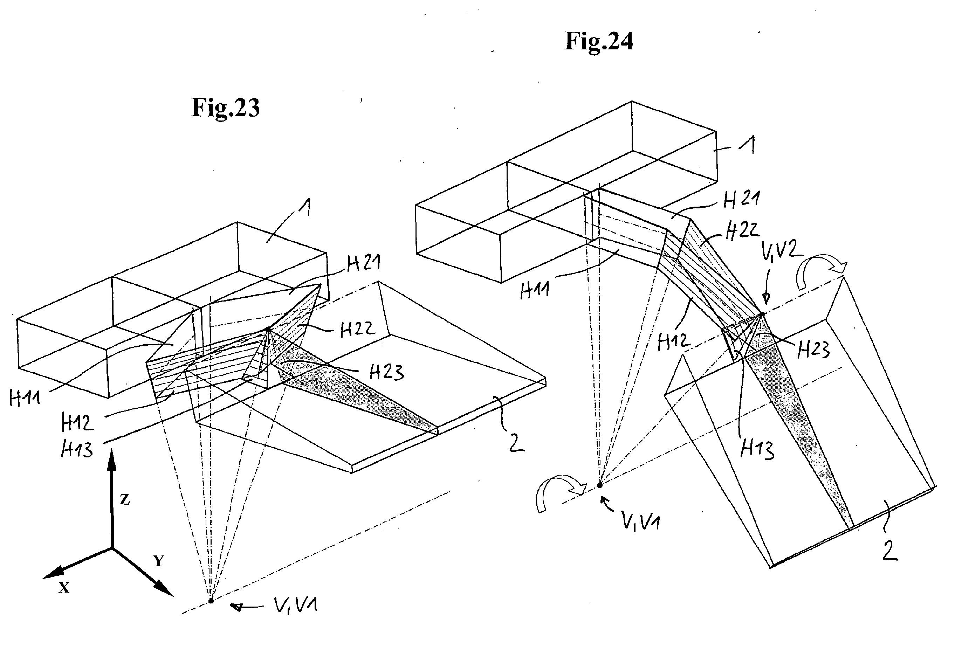

Die Scheitelpunkte oder Vertices V können zueinander auf derselben Seite (Figuren 1, 2, 3 bis 11, 14, 15, 23, 24) oder auf verschiedenen Seiten (Figuren 12, 13, 16 bis 23) in bezug auf die jeweilige Wirkungslinie für die Translations-Bewegung gelegen sein.

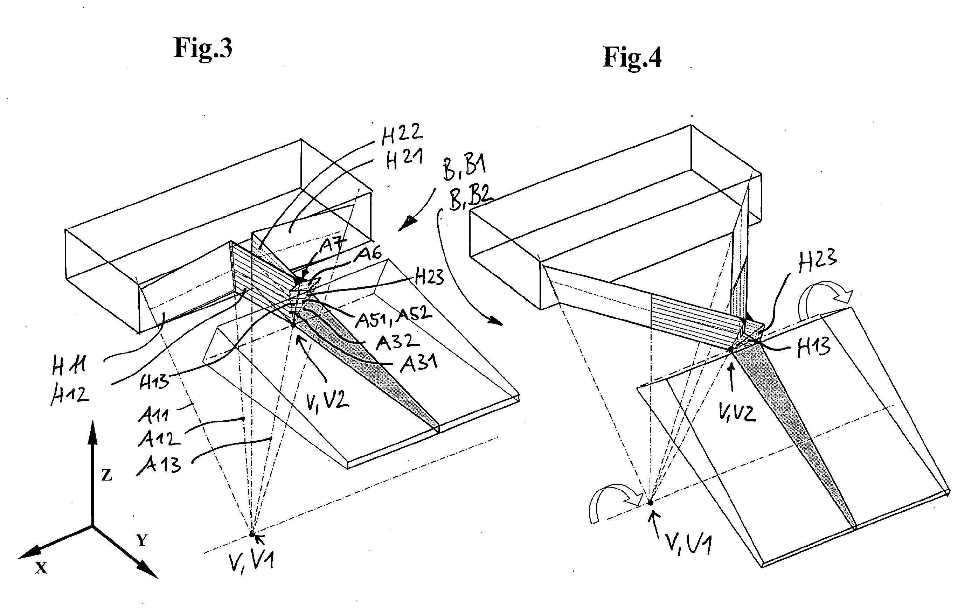

Die erfindungsgemäß vorgesehene Verstell-Einheit kann verschiedenartig ausgeführt sein. Erfindungsgemäß ist zumindest eine der zumindest zwei Verstell-Einheiten einer Betätigungs-Einrichtung B1, B2 aus zumindest einem Hebelpaar mit drei Scharnierachsen, die die zwei Endachsen A11, A13 bzw. A21, A23 und eine mittlere Achse A12 bzw. A22 sind. Bei den dargestellten Ausführungsformen der Betätigungs-Einrichtungen B1, B2 sind in dieser Weise die jeweils ersten Verstell-Einheiten P1 ausgebildet, d.h. diejenigen Verstell-Einheiten, die an dem Tragflügel 1 oder einem Träger-Element angeordnet sind. In dieser Weise können beide oder sämtliche Verstell-Einheiten oder nur eines der Verstell-Einheiten realisiert sein. Die zweite oder weitere Verstell-Einrichtung kann auf ebendiese Weise (Figuren 1, 2 und 14, 15) oder auf andere Weise gestaltet sein (Figuren 3 bis 11, 12 und 13, 16 bis 22, 23 und 24).

In den Figuren gezeigten Verstell-Einheiten sind zwei parallele Wirkungsstränge je Betätigungs-Einrichtung B1, B2 vorgesehen, die bei den dargestellten ersten Verstell-Einheiten ein Hebelpaar mit drei Verstell-Achsen umfassen. Es ist jedoch je nach Anwendungsfall ebenso möglich, nur einen Wirkungsstrang mit einem Hebelpaar vorzusehen.

Zur Bewegung oder Verstellung jeder Betätigungs-Einrichtung ist vorzugsweise ein Stellantrieb an dieses angekoppelt. Ein Stellantrieb kann jedoch auch mehrere Betätigungs-Einrichtungen z.B. über eine Antriebsstange oder ein andere Kraft- oder Momenten-Übertragungselement oder ein Getriebe antreiben, wenn deren Bewegung bestimmungsgemäß zueinander in einer Abhängigkeit stehen.

Bei dem Hintereinanderschalten von zwei unabhängig voneinander ansteuerbaren Verstell-Einheiten P1, P2 (Figuren 1, 2 und 14, 15) übernimmt die beide zusammengekoppelten Verstell-Einheiten verbindende End-Achse A11, A13 bzw. A21, A23 die Funktion einer Verstell-Achse für beide hintereinandergeschaltete Verstell-Einheiten P1, P2. D.h. eine Verstell-Achse ist eine End-Achse für beide zusammengekoppelten Verstell-Einheiten.

Die zweite Verstell-Einheit P2 kann auch mechanisch in einer Weise an der ersten Verstell-Einheit P1 gekoppelt sein und umgekehrt, dass sich die eine Verstell-Einheit verstellt, wenn die andere Verstell-Einheit bewegt wird. Dieser mechanische Zusammenhang wird nachfolgend Zwangs-Koppelung genannt. Dadurch braucht nur ein Stellantrieb an eine der beiden Verstell-Einheiten angekoppelt sein, um die gesamte Betätigungs-Einrichtung B oder B 1, B2 zu betätigen oder zu verstellen. Eine solche Kopplung ist in den Ausführungsformen der Figuren 3 bis 11, 12 und 13, 16 bis 22, 23 und 24 gezeigt. Die Anordnung oder Reihenfolge der Verstell-Einheiten kann auch in umgekehrter Richtung als in diesen Figuren dargestellt realisiert sein; außerdem können auch mehr als zwei Verstell-Einheiten angeordnet sein. Bei solchen nicht dargestellten Ausführungsformen sind die nachfolgend beschriebenen Erfindungsmerkmale analog zu ergänzen.

Bei den dargestellten miteinander mechanisch zwangs-gekoppelten Verstell-Einheiten ist die erste, am Tragflügel angeordnete Verstell-Einrichtung P1 aus zwei parallel wirksamen Paaren von Hebeln, also drei Verstell-Achsen A11, A12, A13, und die zweite, an der Ruderklappe angeordnete Verstell-Einrichtung P2 aus zwei parallel wirksamen Hebeln mit zwei Verstell-Achsen A31, A32 und einem nicht notwendigen Drehgelenk A4 in der Verstell-Achse A13 der entsprechenden Endachse der ersten Verstell-Einrichtung gebildet. Mit dem Drehgelenk A4 wird die zweite Verstell-Einheit an derjenigen Struktur angelenkt ist, die das zweite Pyramidengetriebe betätigt; also bei den dargestellten Ausführungsformen die Ruderklappe. Die Drehachse A4 dieses zweiten Drehgelenks verläuft dann in der Richtung der Rotationsachse der Verstellbewegung der Ruderklappe.

Bei der mechanisch zwangsweisen Kopplung von zwei hintereinander geschalteten Verstell-Einheiten P 1, P2 ist bei der bevorzugten Ausführungsform die entsprechende Verstell-Achse A31 (oder A32 im parallelen Wirkungsstrang), in der Darstellung der entsprechenden Figuren der zweiten Verstell-Einheit am Hebel der ersten Verstell-Einheit P1 bzw. 50, 70 direkt oder indirekt (z.B. über ein Übertragungselement) angeordnet ist. Dabei ist die jeweilige Verstell-Achse A31 (oder A32) winklig zur Wirkebene des entsprechenden Hebel der ersten Verstell-Einheit P1 angeordnet. Vorzugsweise verläuft diese Verstell-Achse A31 (oder A32) innerhalb, also in der Wirkungsebene des Hebels, so dass diese nicht identisch mit der Endachse A3 des ersten Pyramidengetriebes ist (siehe z.B. Figur 3 bis 6). Diese Schwenkachse A31 (oder A32) bildet dabei eine Verstell-Achse der zweiten Verstell-Einheit P2 bzw. 60, 80. Eine weitere Verstell-Achse der zweiten Verstell-Einheit dieser Ausführungsform ist die Endachse A51, A52, die an der Ruderklappe angeordnet ist und die äußere Endachse der Verstell-Einheit ist. Das Drehgelenk A4 ist dazu zur zusätzlichen Kraftübertragung bei der Verstellung der Betätigungs-Einrichtung vorgesehen, so dass eine entsprechende Drehung der Ruderklappe zugelassen wird. Deshalb verläuft die Achse des Drehgelenks quer zur Translationsrichtung des Pyramidengetriebes oder quer zur Flügeltiefen-Richtung, wobei der Scheitelpunkt der Pyramidenachsen im Mittelpunkt der Achse des Drehgelenks gelegen ist, um eine mechanische Klemmung der zweiten Verstell-Einheit zu vermeiden.

Im folgenden werden Ausführungsformen der Erfindung beschrieben, bei denen zwei in einer Wirkungskette hintereinander geschaltete Verstell-Einheiten selbstständig ansteuerbar oder betätigbar sind. Diese sind in den Figuren 1 und 2 sowie 14 und 15 gezeigt. Die in den Figuren 1 und 2 dargestellte Ausführungsform hat eine erste Verstell-Einheit P1, bei der die paarweise wirkenden Verstell-Hebel in ihrer eingefahrenen Position gegeneinander gefaltet sind. Die in den Figuren 14 und 15 dargestellte Ausführungsform hat eine erste Verstell-Einheit P1, bei der die paarweise wirkenden Verstell-Hebel in ihrer eingefahrenen Position zueinander entgegengesetzt gefaltet sind.

Die ersten und zweiten Verstell-Einheiten oder Pyramiden-Getriebe 10, 20 oder 30, 40 nach den Figuren 1, 2 bzw. 14, 15 enthalten jeweils einen ersten Verstell-Hebel oder Schenkel 11, 21 bzw. 31, 41 und einen zweiten Verstell-Hebel oder Schenkel 12, 22 bzw. 32, 42, die an ihrem einen Ende durch eine gemeinsame Verstell-Achse oder innere Achse 15, 25 bzw. 35, 45 miteinander gelenkig, nämlich im Sinne eines Scharniergelenks verbunden sind, und die an ihren anderen Enden jeweilige erste äußere oder End- oder Verstell-Achsen 13, 23 bzw. 33, 43 und zweite äußere oder End-oder Verstell-Achsen 14, 24 bzw. 34, 44 aufweisen. Die ersten und zweiten End- oder Verstell-Achsen 13, 23; 33, 43 bzw. 14, 24; 34, 44 und die innere Verstell-Achse 15, 25; 35, 45 schneiden sich in einem gemeinsamen Scheitelpunkt (Vertex) welcher eine virtuelle Drehachse A11, A12; A13 oder A21, 22, 23 definiert. Bei einer Änderung des Winkels der ersten und zweiten Schenkel 11, 21; 31, 41 bzw. 12, 22; 32, 42 um die gemeinsame Schwenkachse 15, 25; 35, 45 zueinander erfolgt eine Rotation um die virtuelle Drehachse. Allgemein kann die virtuelle Drehachse in einem beliebigen endlichen oder in einem unendlichen Abstand entfernt sein, im letzteren Falle erfolgt dann eine Rotation auf einem Radius unendlicher Länge, es findet also eine Translation statt. Der Abstand der virtuellen Drehachse steht unmittelbar in Beziehung zu dem Winkel, den die erste Endachse 13, 23; 33, 43 und die zweite Endachse 14, 24; 34, 44 zueinander und zu der gemeinsamen Schwenkachse 15, 25; 35, 45 einnehmen.

Bei den beiden dargestellten Ausführungsformen weisen die ersten und zweiten Pyramidengetriebe 10; 30 bzw. 20; 40 unterschiedlich weit entfernt liegende Drehachsen A1; A3 bzw. A2; A4 auf, wobei das erste, näher zum Tragflügel 1 hin angeordnete Pyramidengetriebe 10; 30 eine weiter entfernte virtuelle Drehachse A1; A3 hat als das näher zur Ruderklappe 2 hin angeordnete zweite Pyramidengetriebe 20; 40, dessen virtuelle Drehachse näher ist.

Auf diese Weise bewirkt eine Betätigung des ersten Pyramidengetriebes 10; 30 eher eine Veränderung des Abstandes der Ruderklappe 2 von der Hinterkante des Tragflügels 1 als eine Rotation, während die Betätigung des zweiten Pyramidengetriebes 20; 40 eher eine Rotation und damit eine Verstellung des Winkels der Ruderklappe 2 als eine Translation bewirkt.

Bei den beiden gezeigten Ausführungsbeispielen dienen die ersten Pyramidengetriebe 10; 30 also in erster Linie zur Verschiebung der Ruderklappe 2 bezüglich der Hinterkante des Tragflügels 1, wobei eine kombinierte Translations- und Rotationsbewegung stattfindet, wenn die virtuelle Drehachse des ersten Pyramiednegetriebes 10; 30 im endlichen liegt, wie in den Figuren 1, 2; 14, 15 gezeigt, und es findet eine reine Translationsbewegung statt, für den Sonderfall, dass die virtuelle Drehachse unendlich weit entfernt ist. Das zweite Pyramidengetriebe 20; 40, welches mit dem ersten Pyramidengetriebe 10; 30 gekoppelt ist, kann dagegen als Verstelleinrichtung verstanden werden, die im wesentlichen zu Verstellung der Abwinkelung der Ruderklappe 2 dient, hier findet also in erster Linie eine Rotationsbewegung statt, während die Translationsbewegung nur gering ist.

Bei dem in den Figuren 1 und 2 gezeigten ersten Ausführungsbeispiel ist die erste Endachse 13 des ersten Schenkels 11 des ersten Pyramidengetriebes 10 an einem Punkt mit der tragenden Struktur des Flügels 1 verbunden, der in Richtung parallel zu der virtuellen Drehachse A1 gesehen seitlich um einen Abstand gegen den Punkt versetzt ist, an welchem die zweite Endachse 14 des zweiten Schenkels 12 indirekt über das zweite Pyramidengetriebe 30 mit der Ruderklappe 2 verbunden ist, wobei dieser Abstand im wesentlichen der Länge des ersten Schenkels 11 entspricht. Beim Ausfahren der Ruderklappe 2 werden somit die ersten und zweiten Schenkel 11, 12 aus der in Figur 1 gezeigten abgewinkelten Position in die in Figur 2 gezeigte gestreckte Position gebracht.

Bei dem in den Figuren 14 und 15 gezeigten zweiten Ausführungsbeispiel dagegen ist die erste Endachse 33 des ersten Schenkels 31 des ersten Pyramidengetriebes 30 an einem Punkt mit der tragenden Struktur des Flügels 1 verbunden, der in Richtung der Profiltiefe gesehen im wesentlichen in einer Flucht bzw. nur geringfügig versetzt dazu, vor dem Punkt liegt, an welchem die zweite Endachse 34 des zweiten Schenkels 32 über das zweite Pyramidengetriebe 40 indirekt mit der Ruderklappe 2 verbunden ist. Somit werden die ersten und zweiten Schenkel 31, 32 des ersten Pyramidengetriebes 30 beim Ausfahren der Ruderklappe 2 aus der in Figur 14 gezeigten spitz angewinkelten Position in die in Figur 15 gezeigte gestreckte Position gebracht, wobei die ersichtliche Bewegung um die Drehachse des ersten Pyramidengetriebes 20 erfolgt.

Bei beiden in Figuren 1, 2; 14, 15 gezeigten Ausführungsformen ist das zweite Pyramidengetriebe 20; 40 mechanisch hinter das erste Pyramidengetriebe 10; 30 geschaltet, wobei der erste Schenkel 21; 41 des zweiten Pyramidengetriebes 20; 40 mit seiner ersten Endachse 23; 43 mit der zweiten Endachse 14; 34 des ersten Pyramidengetriebes 10; 30 verbunden oder mit dieser gemeinsam ist, und wobei der zweite Schenkel 22; 42 des zweiten Pyramidengetriebes 20; 40 mit seiner zweiten Endachse 24; 44 an einem Punkt mit der Ruderklappe 2 verbunden ist, der in Richtung der Profiltiefe gesehen im wesentlichen hinter dem Punkt liegt oder nur wenig versetzt ist, an welchem der erste Schenkel 21; 41 des zweiten Pyramidengetriebes 20; 40 mit seiner ersten Endachse 23; 43 mit dem ersten Pyramidengetriebe 10; 30 verbunden ist.

Anstelle der in den Figuren 1, 2; 14, 15 gezeigten Kombination eines ersten Pyramidengetriebes 10; 30 mit einer weiter entfernten virtuellen Drehachse und eines zweiten Pyramidengetriebes 20; 40 mit einer näher liegenden virtuellen Drehachse kann auch ein einziges Pyramidengetriebe verwendet werden, welches eine ähnliche kombinierte Translations- und Rotationsbewegung bewirkt wie die Kombination der Bewegungen der ersten und zweiten Pyramidengetriebe 10, 20; 30, 40 gemeinsam.

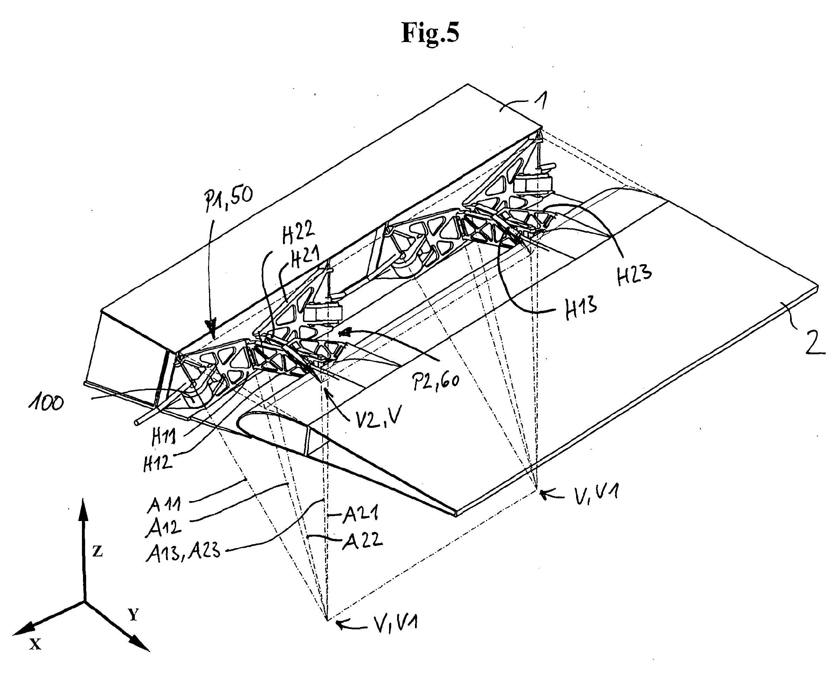

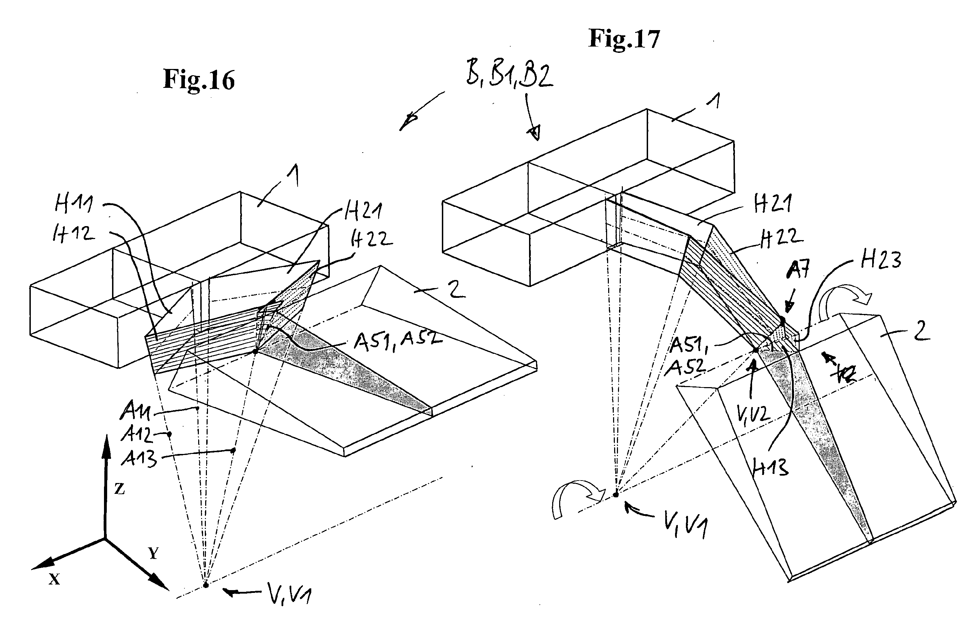

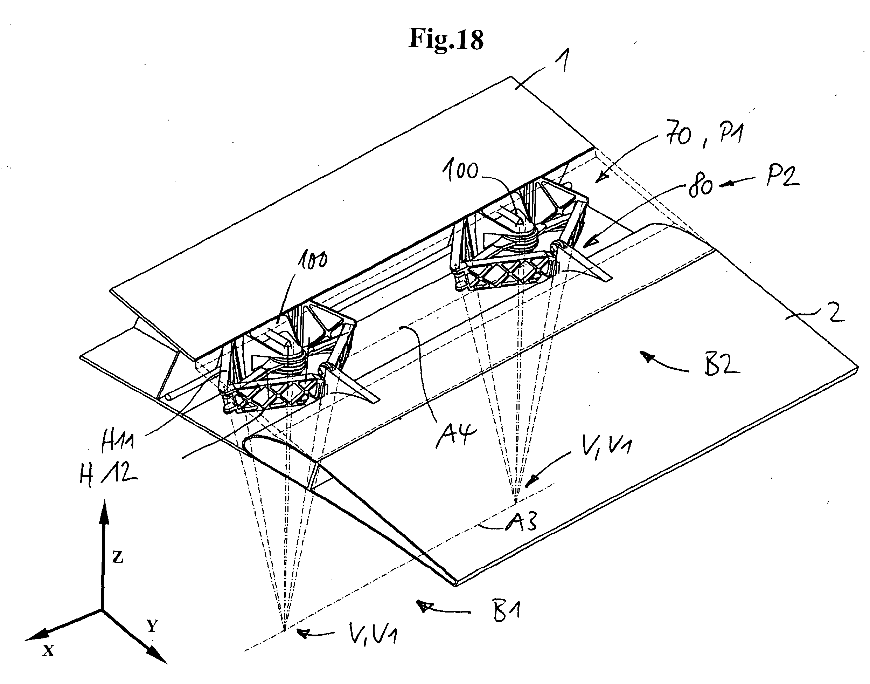

Im folgenden wird die Erfindung oder deren Ausführungsformen anhand der DetailDarstellungen der Figuren 5 bis 11 und 18 bis 22 beschrieben, wobei sich die Figuren 5 bis 11 auf die Schema-Darstellung der Figuren 3, 4 und sich die Figuren 18 bis 22 auf die Schema-Darstellung der Figuren 16, 17 beziehen. Merkmale mit dergleichen Funktion sind mit denselben Bezugszeichen versehen.

Bei der Ausführungsform der Erfindung nach den Figuren 3 bis 11, 12 und 13 sowie 16 bis 22, 23 und 24 ist also zumindest ein Hebel H31, H32 der zweiten Verstell-Einheit P2 einerseits an dem benachbarten Hebel H12 bzw. H22 der ersten Verstell-Einheit P1 und andererseits an einer Struktur-Anschlußstelle, also z.B. der Ruderklappe 2 oder dem einem Träger-Element des Tragflügels 1 angelenkt (Hinweis: Das in den Prinzipskizzen eingezeichnete Element A6 ist lediglich ein Anschluss-Element, da dieses über die Stelle A7 an dem Hebel H21, H22 fixiert ist). Zur weiteren Verbindung der Ruderklappe 2 bzw. des Flügelträgers 1 an der Betätigungs-Vorrichtung B, B1, B2 kann ein zusätzliches, optional vorgesehenes Drehgelenk A4 angeordnet sein. Dieses verbindet in einer bevorzugten Ausführungsform der Erfindung die der zweiten Verstell-Einheit P2 zugewandte Endachse A13, A23 der ersten Verstell-Einheit P1 mit dem von der zweiten Verstell-Einheit P2 betätigbaren Strukturteil (in den Figuren 2, 4; 12, 13; 16, 17; 23, 24 jeweils die Ruderklappe 2), wobei die Achsen-Richtung des Drehgelenks A4 in Richtung der Rotationsachse für die Verstellung des Strukturteils oder der Ruderklappe 2 verläuft. Der Scheitelpunkt oder Vertex V2 der Gelenk-Achsen A31, A51 bzw. A32, A52 der zweiten Verstell-Einheit P2 muss dabei im Mittelpunkt der Achse des optional vorgesehenen, zusätzlichen Drehgelenks A4 gelegen sein, um eine mechanische Klemmung der zweiten Verstell-Einheit P2 zu vermeiden.

Es wird nochmals darauf hingewiesen, dass in den Figuren die Betätigungs-Einrichtungen B1, B2 jeweils zwei parallel wirkende Hebel-Anordnungen je Verstell-Einheit P1, P2 aufweisen. So hat in den Betätigungs-Einrichtungen B1, B2, die z.B. in den Figuren 2, 4; 12, 13; 16, 17; 23, 24 gezeigt sind, die erste Verstell-Einheit P1 zwei Hebelpaare, also ein erstes Paar von Verstell-Hebeln H11, H12 sowie ein zweites Paar von Verstell-Hebeln H21, H22, und die zweite Verstell-Einheit P2 zwei Verstell-Hebel H31, H22. Beide Verstell-Einheiten könnten auch mit nur einem Hebelstrang ausgebildet sein; so könnte die erste Verstell-Einheit P1 mit nur einem Paar von schwenkbaren Verstell-Hebeln (z.B. H11, H12) und die zweite Verstell-Einheit P2 mit einem Verstell-Hebel H31 (oder H22) realisiert sein. Auch könnte eine Verstell-Einheit einen Hebelstrang und eine andere angekoppelte Verstell-Einheit zwei Hebelstränge aufweisen. Es wird ebenfalls darauf hingewiesen, dass auch mehr als zwei Verstell-Einheiten in einer Wirkungskette zwischen zwei zueinander verstellbaren oder beweglichen Strukturteilen angeordnet sein können, wobei jede Verstell-Einheit nach einer der beschriebenen Varianten realisiert sein kann. Die Anzahl der zum Antrieb einer Ruderklappe angeordneten Pyramidengetriebe-Anordnungen hängt jedoch vom jeweiligen Anwendungsfall ab.

Die Figuren 5 und 6 bzw. 18 und 19 für die beiden anhand der Figuren 3 und 4 bzw. 16 und 17 vom Prinzip her erläuterten Ausführungsbeispiele zeigen, wie die jeweiligen Verstell-Einheiten oder Pyramidengetriebe 50, 60; 70, 80 (in der schematischen Darstellung der Figuren3, 4, 12, 13, 16, 17, 23, 24: P1, P2) tatsächlich ausgeführt sein könnten. Für den Antrieb der zwangsweise miteinander gekoppelten Verstell-Einheiten oder Pyramidengetriebe 50, 60; 70, 80 oder P1, P2 und damit für die Betätigung der Ruderklappe 2 im Sinne ihres Ausfahrens und Einfahrens ist jeweils ein Stellantrieb vorgesehen. Dieser ist z.B. in Form einer Drehaktuator-Einrichtung 100 dargestellt, die mit einer im wesentlichen in Richtung der Flügelausdehnung, also im wesentlichen parallel zur virtuellen Drehachse der Pyramidengetriebe verlaufenden Antriebswelle 18 bzw. 38 gekoppelt und durch diese angetrieben ist.

Die zweite Verstell-Einheit P2 ist für seinen Antrieb mit der ersten Verstell-Einheit P1 gekoppelt. Hierfür können die ersten Schenkel 21; 41 der zweiten Verstell-Einheit 20; 40 für den Antrieb mit den zweiten Schenkeln 12; 32 der ersten Verstell-Einheit 10, 30 gekoppelt oder mit diesen einstückig ausgebildet sein.

Wie in den Figuren 5 und 6 bzw. 10 und 11 zu sehen ist, sind die Verstell-Einheiten 50, 60 bzw. 70, 80 oder P1, P2 jeweils symmetrisch aufgebaut mit jeweils zwei einander entsprechenden ersten Schenkeln H11, H12 und jeweils zwei einander ents prechenden symmetrischen zweiten Schenkeln H21, H22. Hierdurch ergibt sich eine hohe Festigkeit und eine starke Führung in Richtung parallel zur virtuellen Drehachse.

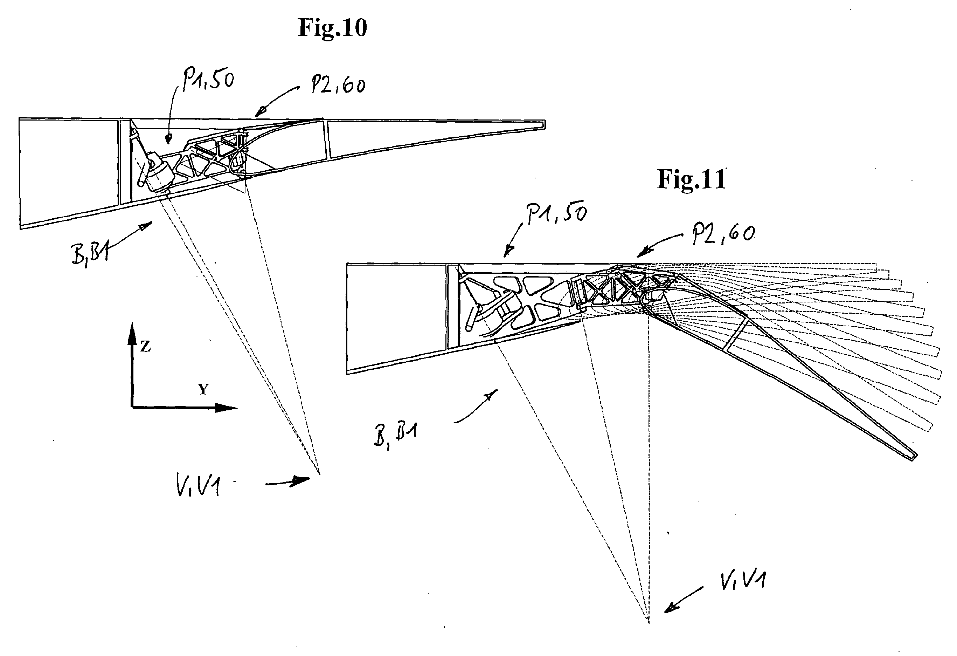

In der Figur 11 ist zu sehen, wie bei dem zweiten Ausführungsbeispiel die ersten und zweiten Verstell-Hebel der ersten Verstell-Einheit P1 aus der abgewinkelten Position bei eingefahrener Ruderklappe in die gestreckte Position bei ausgefahrener Ruderklappe gebracht werden.

## Patentansprüche

1. Betätigungs-Einrichtung zur Bewegung zweier Strukturteile (1, 2) relativ zueinander zwischen einer eingefahrenen Stellung und einer ausgefahrenen Stellung mit einem Rotations- und einem Translations-Anteil,
**dadurch gekennzeichnet, dass**
die Betätigungs-Einrichtung (B, B1, B2) zumindest eine einerseits mit der tragenden Struktur des Flügels (1) und andererseits mit der Ruderklappe (2) verbundene Verstell-Einheit (10, 20; 30, 40; 50, 60; 70, 80; P1, P2) mit mindestens einer, insbesondere in einem endlichen Abstand von der Ebene des Flügelprofils liegenden, virtuellen Drehachse (D1, D2; D3, D4) sowie eine Antriebseinrichtung (100) umfasst, bezüglich der die Strukturteile (1, 2) zueinander verfahrbar sind.

2. Betätigungseinrichtung nach Anspruch 1, **dadurch gekennzeichnet, dass** die Betätigungseinrichtung eine Pyramidengetriebeanordnung (10; 30), welche im wesentlichen zur Veränderung des Abstandes der Ruderklappe (2) von der Hinterkante des Tragflügels (1) dient und eine mechanisch mit der Pyramidengetriebeanordnung (10; 30) gekoppelte Verstelleinrichtung, welche im wesentlichen zur Verstellung der Abwinkelung der Ruderklappe (2) dient, umfasst.

3. Betätigungseinrichtung nach Anspruch 2, **dadurch gekennzeichnet, dass** die Verstelleinrichtung durch ein zweites Pyramidengetriebe (20; 40) gebildet ist, welches mit einem ersten Pyramidengetriebe (10; 30) der Pyramidengetriebeanordnung (10, 20; 30, 40) zwischen der tragenden Struktur des Flügels (1) und der Ruderklappe (2) mechanisch hintereinandergeschaltet ist.

4. Betätigungseinrichtung nach Anspruch 1, **dadurch gekennzeichnet, dass** die Pyramidengetriebeanordnung erste und zweite Pyramidengetriebe (10; 30 bzw. 20; 40) umfasst, die zwischen der tragenden Struktur des Flügels (1) und der Ruderklappe (2) mechanisch hintereinander geschaltet sind.

5. Betätigungseinrichtung nach Anspruch 3 oder 4, **dadurch gekennzeichnet, dass** die ersten und zweiten Pyramidengetriebe (10; 30 bzw. 20; 40) unterschiedlich weit entfernt liegende virtuelle Drehachsen (A1; A3 bzw. A2 ; A4) aufweisen.

6. Betätigungseinrichtung nach Anspruch 5, **dadurch gekennzeichnet, dass** das erste, näher zum Tragflügel (1) hin angeordnete Pyramidengetriebe (10; 30) eine weiter entfernte virtuelle Drehachse (A1; A3) aufweist als die virtuelle Drehachse (A2; A4) des zweiten, näher zur Ruderklappe (2) hin angeordnetem Pyramidengetriebes (20; 40).

7. Betätigungseinrichtung nach Anspruch 5 oder 6, **dadurch gekennzeichnet, dass** die weiter entfernte virtuelle Drehachse im Unendlichen liegt.

8. Betätigungseinrichtung nach einem der Ansprüche 1 bis 7, **dadurch gekennzeichnet, dass** die ersten und/oder zweiten Pyramidengetriebe (10, 20; 30, 40) jeweils einen ersten Schenkel (11, 21; 31, 41) und einen zweiten Schenkel (12, 22; 32, 42) enthalten, die an ihrem einen Ende durch eine gemeinsame Schwenkachse (15,25;35,45) miteinander gelenkig verbunden sind, und die an ihren jeweiligen anderen Enden über eine erste Endachse ( 13, 23; 33, 43) direkt oder indirekt mit dem Tragflügel (1) und über eine zweite Endachse (14, 24; 34, 44) direkt oder indirekt mit der Ruderklappe (2) verbunden sind.

9. Betätigungseinrichtung nach Anspruch 8, **dadurch gekennzeichnet, dass** die erste und zweite Endachse (13, 23; 33, 43 bzw. 14, 24; 34, 44) und die Schwenkachse (15, 25; 35, 45) sich in einem gemeinsamen Scheitelpunkt (Vertex) schneiden, der auf der virtuellen Drehachse (A1, A2; A3, A4) liegt.

10. Betätigungseinrichtung nach Anspruch 8 oder 9, **dadurch gekennzeichnet, dass** der erste Schenkel (11) der ersten Pyramidengetriebe (10) mit seiner ersten Endachse (13) an einem Punkt mit der tragenden Struktur des Flügels (1) verbunden ist, der in Richtung parallel zu der virtuellen Drehachse (A1) seitlich um einen Abstand gegen den Punkt versetzt ist, an welchem der zweite Schenkel (12) mit seiner zweiten Endachse (14) direkt oder indirekt mit der Ruderklappe (2) verbunden ist, der im wesentlichen der Länge des ersten Schenkels (11) entspricht.

11. Betätigungseinrichtung nach Anspruch 8 oder 9, **dadurch gekennzeichnet, dass** der erste Schenkel (31) der ersten Pyramidengetriebe (30) mit seiner ersten Endachse (33) an einem Punkt mit der tragenden Struktur des Flügels (1) verbunden ist, der in Richtung der Profiltiefe gesehen im wesentlichen vor dem Punkt liegt, an welchem der zweite Schenkel (32) mit seiner zweiten Endachse (34) direkt oder indirekt mit der Ruderklappe (2) verbunden ist.

12. Betätigungseinrichtung nach einem der Ansprüche 8 bis 11, **dadurch gekennzeichnet, dass** die zweiten Pyramidengetriebe (20; 40) mechanisch hinter die ersten Pyramidengetriebe (10; 30) geschaltet sind, wobei der erste Schenkel (21; 41) der zweiten Pyramidengetriebe (20; 40) mit seiner ersten Endachse (23; 43) mit der zweiten Endachse (14; 34) der ersten Pyramidengetriebe (10; 30) verbunden oder mit dieser gemeinsam ist, und wobei der zweite Schenkel (22; 42) der zweiten Pyramidengetriebe (20; 40) mit seiner zweiten Endachse (24; 44) an einem Punkt mit der Ruderklappe (2) verbunden ist, der in Richtung der Profiltiefe gesehen im wesentlichen hinter dem Punkt liegt, an welchem der erste Schenkel (21; 41) mit seiner ersten Endachse (23; 43) mit dem ersten Pyramidengetriebe (10; 30) verbunden ist.

13. Betätigungseinrichtung nach Anspruch 1, **dadurch gekennzeichnet, dass** die Betätigungseinrichtung eine einzige Pyramidengetriebeanordnung, umfasst welche sowohl zur Veränderung des Abstandes der Ruderklappe (2) von der Hinterkante des Tragflügels (1) als auch zur Verstellung der Abwinkelung der Ruderklappe (2) dient.

14. Betätigungseinrichtung nach einem der Ansprüche 1 bis 13, **dadurch gekennzeichnet, dass** die Antriebseinrichtung zum Einfahren und Ausfahren der Ruderklappe (2) eine mit dem ersten Pyramidengetriebe (10; 30) gekoppelte Drehaktuatoreinrichtung (19; 39) umfasst.

15. Betätigungseinrichtung nach Anspruch 14, **dadurch gekennzeichnet, dass** die Drehaktuatoreinrichtung (19; 39) für ihren Antrieb mit einer im wesentlichen in Richtung der Flügelausdehnung verlaufenden Antriebswelle (18; 38) gekoppelt ist.

16. Betätigungseinrichtung nach einem der Ansprüche 1 bis 15, **dadurch gekennzeichnet, dass** die zweiten Pyramidengetriebe, (20; 40) für ihren Antrieb mit den ersten Pyramidengetrieben (10; 30) gekoppelt sind.

17. Betätigungseinrichtung nach Anspruch 16, **dadurch gekennzeichnet, dass** die ersten Schenkel (21; 41) der zweiten Pyramidengetriebe (20;40) für den Antrieb mit den zweiten Schenkeln (12; 32) der ersten Pyramidengetriebe (10; 30) gekoppelt oder mit diesen einstückig ausgebildet sind.

18. Betätigungseinrichtung nach einem der voranstehenden Ansprüche, **dadurch gekennzeichnet, dass** eines der Strukturteile ein Tragflügel, und das andere der Strukturteile eine Ruderklappe (2) eines Flugzeugs ist.
